# FASCICULE DE BREVET EUROPEEN

(11) **EP 2 571 113 B1**
(45) Date de publication et mention de la délivrance du brevet: **26.11.2014**
(21) Numéro de dépôt: 12183154.9
(22) Date de dépôt: 05.09.2012
(51) Int. Cl.: H01R 13/74, H01R 13/645, F16B 21/04

(54) **Dispositif de fixation et de connexion rapide pour connecteur en deux parties**
Befestigungs- und Schnellverbindungsvorrichtung für zweiteiligen Anschluss
Attachment and quick-connection device for a two-part connector

(30) Priorité: 16.09.2011 FR 1158259
(43) Date de publication de la demande: 20.03.2013
(73) Titulaire: Amphenol Air LB, 08110 Blagny (FR)
(72) Inventeur: Cayzac, Gaspard, 08370 Margut (FR)
(74) Mandataire: Delprat, Olivier

(56) Documents cités:
- EP-A1- 0 684 664
- EP-A1- 1 732 180
- EP-A1- 2 337 164

## Description

L'invention concerne les dispositifs de connexion, et notamment les dispositifs de connexion pour câbles comprenant un connecteur en deux parties destinées à venir s'assembler de part et d'autre d'une paroi support qui est ainsi traversée par les câbles.

De tels connecteurs servent classiquement à assurer le raccordement de câbles électriques mais pourraient servir à raccorder d'autres types de câbles, comme des câbles optiques.

Ces connecteurs peuvent être utilisés pour raccorder un faisceau de câbles entre l'intérieur et l'extérieur d'un appareil délimité par la paroi support, et peuvent être utilisés dans des engins de transport, par exemple dans des avions, pour assurer l'alimentation et les échanges de données d'éléments électriques ou électroniques embarqués.

Les connecteurs de ce type comprennent généralement deux parties de connecteur appariées, qui viennent se fixer l'une sur l'autre en emprisonnant entre elles une portion de la paroi support. La tôle support est percée d'une ouverture permettant le passage des câbles et peut être également percée d'une ou plusieurs ouvertures permettant le passage de dispositifs de fixation de type vis-écrou, ou d'autres dispositifs de fixation, qui traversent les deux parties de connecteur et la paroi support.

Afin d'assurer une connexion correcte des câbles, les connecteurs sont souvent pourvus de moyens de détrompage afin qu'un opérateur ne puisse assembler une partie de connecteur que sur la partie de connecteur associée, et qu'il ne puisse l'assembler que dans une seule position.

Ces moyens de détrompage peuvent en même temps comprendre des moyens de solidarisation des deux parties de connecteur entre elles, comme par exemple dans la demande de brevet français FR 2 849 967.

Dans ce document, une vis de fixation vient s'accrocher directement dans un élément de détrompage lui faisant face, la vis étant guidée par un second élément du détrompeur complémentaire du premier élément. La fixation de la vis nécessite l'utilisation d'un outil adapté et peut être longue à mettre en oeuvre. Le dispositif décrit nécessite la manutention d'au moins trois pièces différentes : une première partie de détrompeur, une seconde partie de détrompeur, et une vis de fixation. La demande de brevet français FR 2 887 079 propose d'utiliser une vis quart de tour, et de préassembler la vis quart de tour dans le second élément de détrompage.

Un inconvénient des dispositifs précédemment décrits, est que l'une ou l'autre des parties de connecteur n'est solidement arrimée à la plaque support que quand le connecteur est fermé et maintenu par les vis de fixation. Dans le document FR 2 849 967, une fixation intermédiaire d'une des parties du connecteur est prévue sur la plaque support à l'aide de reliefs de clipsage, mais cette fixation transitoire ne permet pas à coup sûr d'obtenir une fixation parfaite et reproductible, et est malaisée à désinstaller en l'absence d'outil spécifique. Des dispositifs comportant un système vis-écrou à filetage hélicoïdal permettent une fixation rigide d'une des parties de connecteur sur la paroi support, mais la mise en place de l'écrou est longue à mettre en oeuvre, nécessite l'emploi d'un outil spécifique, et nécessitent la manutention d'au moins deux pièces supplémentaires : l'écrou et son outil associé.

La demande de brevet EP 1 732 180 A1 divulgue un dispositif de fixation pour connecteur en deux parties tel que décrit dans le préambule de la revendication indépendante 1 de la présente invention.

L'invention a pour but de rendre plus simple et plus rapide l'opération d'assemblage et de fixation des deux parties de connecteur de part et d'autre de la paroi de support, et de limiter le nombre de pièces à gérer lors de l'installation du connecteur.

L'invention a également pour but de proposer un système de fixation qui permette d'arrimer solidement et rapidement une des parties de connecteur à la paroi support, même en l'absence de l'autre partie de connecteur. L'arrimage intermédiaire et la fixation finale du connecteur, doivent de préférence pouvoir se faire sans outil spécifique, de manière rapide et en assurant une prise solide.

A cette fin, il est proposé un dispositif de fixation amovible pour un connecteur, servant au raccordement de câbles arrivant de part et d'autre d'une plaque support. Par câble on entend tout élément de transmission, d'énergie, de signal, de fluide, par exemple un câble électrique, optique ou hydraulique. Le dispositif comporte une première douille et une seconde douille comprenant chacune un corps de guidage et une tête d'arrêt élargie. Le dispositif comprend en outre une vis de type quart de tour traversant axialement la seconde douille, et comportant au moins deux premiers pions apte à venir se verrouiller par l'intérieur de la première douille dans un filetage de la première douille. Le dispositif comporte un écrou de type quart de tour, muni de pions intérieurs. Le filetage traverse la paroi de la première douille, l'épaisseur de ladite paroi étant supérieure à la longueur d'engagement des premiers pions de la vis. L'extrémité filetée de la première douille comporte des rainures d'engagement sensiblement axiales, permettant d'engager dans le filetage, par une face extérieure de la douille, deux seconds pions, dépassant radialement vers l'intérieur de l'écrou. L'écrou peut ainsi être vissé dans le même filetage de la première douille, conjointement à la vis quart de tour.

De manière préférentielle, les têtes d'arrêt sont de forme polygonale, et les corps de guidage sont sensiblement cylindriques et comportent sur la face extérieure du cylindre au moins un élément élastique apte à ancrer axialement le corps de guidage dans un logement cylindrique correspondant.

Avantageusement, la première douille comporte au moins une dent de détrompage s'étendant axialement à l'opposé de la tête d'arrêt, et apte à s'insérer dans un orifice complémentaire de la seconde douille, l'orifice complémentaire étant excentré par rapport à l'axe commun de montage des deux douilles.

De manière préférentielle, la dent s'étend sur une portion angulaire limitée par deux rainures d'engagement.

Selon un mode de réalisation avantageux, la seconde douille comporte un espace cylindrique intérieur de diamètre supérieur ou égal à la distance radiale entre les extrémités des deux premiers pions de la vis. Cet espace cylindrique est limité du côté de la tête de la douille par une rondelle rapportée, pouvant être traversée axialement par les pions de la vis quart de tour pour une première position angulaire de la vis par rapport à la douille, et interdisant le passage des pions de la vis pour une seconde position angulaire de la vis. Cet espace cylindrique est limité du côté opposé à la tête, par une paroi d'extrémité pouvant être traversée axialement par les pions de la vis quart de tour pour une troisième position angulaire de la vis, et interdisant le passage des pions pour une quatrième position angulaire de la vis par rapport à la douille. La même paroi d'extrémité comporte une découpe permettant l'insertion de la dent de détrompage dans l'espace cylindrique. La découpe permet l'insertion de la dent de détrompage, qui est excentrée, pour une seule une position angulaire relative entre les deux douilles.

Selon un autre mode de réalisation, la seconde douille est monobloc, percée de part en part par un orifice permettant d'insérer la vis quart de tour et ses deux pions par une extrémité, de ressortir les deux pions par l'autre extrémité pour la même orientation angulaire de la vis, et permettant de bloquer le passage des pions pour au moins une autre orientation angulaire de la tige. La seconde douille est également percée de part en part un orifice apte à recevoir la dent. Les deux orifices traversant la seconde douille, ou les deux orifices traversant la paroi d'extrémité, peuvent à chaque fois être confondus en un seul orifice de section adapté. Les plus grandes dimensions des deux orifices (l'orifice centré destiné aux pions, et l'orifice excentré destiné à la dent) sont de préférence disposées perpendiculairement l'une par rapport à l'autre. Par dimension de l'orifice, on entend les dimensions de la section de passage de l'orifice, c'est-à-dire les dimensions dans un plan perpendiculaire à l'axe des douilles.

Selon un mode de réalisation préféré, la seconde douille comporte à son extrémité opposée à la tête d'arrêt, un creux d'appui et de prépositionnement angulaire des pions de la vis quart de tour, l'axe ainsi défini pour les pions se projetant axialement sur les rainures d'engagement quand la dent de la première douille est insérée dans la seconde douille.

Avantageusement, la vis quart de tour et l'écrou comportent chacun au moins deux zones de prises s'étendant axialement et les rendant aptes à être vissés à la main sans outil.

Selon un autre aspect, un ensemble de connexion comprend un dispositif tel que décrit précédemment, et comporte une première partie de connecteur et une seconde partie de connecteur, aptes à recevoir respectivement la première douille et la seconde douille dans deux alésages en regard l'un de l'autre. De manière préférentielle le corps de guidage de la première douille a une longueur telle que le filetage quart de tour dépasse entièrement de l'alésage associé quand la première douille est en place dans cet alésage. Avantageusement, la zone d'alésage de la première partie du connecteur est, en position connectée, espacée axialement de la zone d'alésage de la seconde partie de connecteur, de manière à réserver entre les deux zones d'alésage un espace axial strictement supérieur à l'épaisseur axiale de l'écrou. Avantageusement, la longueur des deux douilles est telle qu'elles viennent en contact l'une avec l'autre par leurs extrémités lorsque la première partie et la seconde partie de connecteur sont assemblées, et que les deux douilles sont insérées en butée dans leurs logements respectifs.

Selon un mode de réalisation préféré, l'ensemble de connexion comprend un élément élastique compressible axialement, apte à être disposé autour de la première douille, interposé entre la première partie de connecteur et l'écrou vissé autour de la première douille, et apte, en absence d'autres éléments intercalés entre la première partie de connecteur et l'écrou, à exercer un appui axial simultanément sur la première partie de connecteur et sur l'écrou vissé. L'élément élastique peut être solidaire de la première partie de connecteur. Selon une autre variante de réalisation, l'élément élastique peut être solidaire de l'écrou. L'élément élastique peut par exemple être surmoulé sur l'écrou. Grâce à l'élément élastique, la première partie de connecteur peut être livrée en vue de son assemblage avec la première douille préassemblée et portant l'écrou, sans risque de perdre l'écrou.

L'élément élastique peut comprendre une coupelle élastomère entourant l'alésage de la première partie de connecteur, la coupelle étant maintenue par compression radiale de sa base dans un logement de la première partie de connecteur.

Avantageusement, la coupelle élastomère comporte une paroi axiale interrompue sur au moins une portion angulaire de la coupelle.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue éclatée en perspective d'un ensemble de connexion selon l'invention,
- la figure 2 est une vue en perspective d'un élément d'un dispositif de fixation selon l'invention,
- la figure 3 est une vue en perspective d'un autre élément d'un dispositif de fixation selon l'invention,
- la figure 4 est une vue en coupe d'un ensemble de connexion selon l'invention en cours d'assemblage, et
- la figure 5 est une autre vue en coupe de l'ensemble de connexion de la figure 4 en position assemblée.

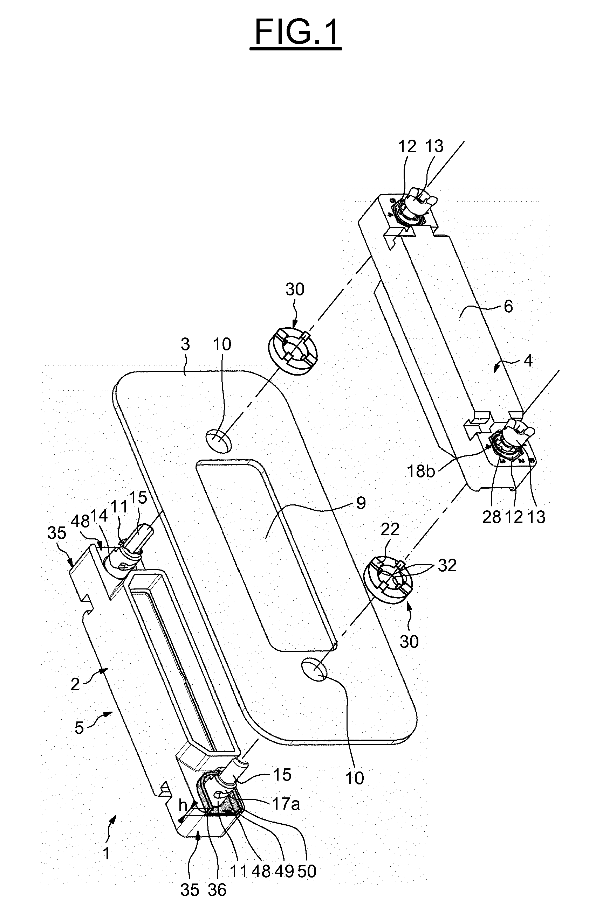

Tel qu'illustré sur la figure 1, un ensemble de connexion 1, destiné à faire se rejoindre deux faisceaux de câbles (non représentés) au niveau d'une ouverture 9 d'une paroi support 3, comprend une première partie de connecteur 2, une seconde partie de connecteur 4, deux premières douilles d'assemblage 11 traversant la première partie de connecteur 2, et deux secondes douilles d'assemblage 12 traversant la seconde partie de connecteur 4. Lors de l'assemblage, les premières douilles 11 traversent des perçages latéraux 10 de la paroi support, ménagés de part et d'autre de l'ouverture centrale 9. Les premières douilles 11 sont munies de dents de détrompage 15 aptes à venir s'insérer dans un orifice complémentaire ménagé sur les secondes douilles 12.

Chacune des douilles 11, 12 comprend respectivement un corps de guidage 17a, 17b sensiblement cylindrique, et une tête d'arrêt 18a, 18b qui présente une forme polygonale, par exemple hexagonale, ou, de manière plus générale une forme apte à empêcher la rotation de la douille autour de son axe xx' lorsque la tête d'arrêt 18a ou 18b est insérée dans un logement complémentaire 28 ménagé dans l'une ou l'autre partie de connecteur.

Dans toute la description, on désigne par direction axiale, la direction xx' commune aux axes des deux douilles, qui est aussi la direction perpendiculaire à la paroi support 3, et la direction selon laquelle on vient fermer la seconde partie de connecteur sur la première partie de connecteur.

La première partie de connecteur comprend une zone centrale 5, destinée à porter les extrémités des câbles à connecter, cette zone centrale étant de forme complémentaire à une zone centrale 6 de la seconde partie de connecteur. La zone centrale 5 de la première partie de connecteur fait axialement saillie par rapport à deux zones latérales 35 de la première partie de connecteur, si bien que cette zone centrale peut venir s'insérer dans l'ouverture 9 de la paroi support, en même temps que les zones latérales 35 viennent en appui contre la paroi support 3, au niveau des perçages latéraux 10 de la paroi support.

Sur les faces d'appui des zones latérales 35 de la première partie de connecteur, sont disposées des coupelles en élastomère 36, disposées autour des alésages destinés aux premières douille 11. Chaque coupelle 36 présente au moins une paroi axiale 50, qui est comprimée suivant cette même direction axiale entre le connecteur et la paroi support 3, lorsque l'on insère la première partie de connecteur 2 dans l'ouverture 9, et que l'on cherche à amener les zones latérales 35 en appui sur la paroi support 3. Sur la figure 1, une seule coupelle élastomère est représentée pour simplifier la figure, mais l'ensemble de connexion comprend deux coupelles, une autour de chaque première douille.

L'ensemble de connexion comprend deux écrous 30 de type quart de tour, munis sur leur circonférence intérieure de deux pions 32 aptes à venir s'accrocher dans un filetage 14 des premières douilles 11.

A l'aide de ces écrous 30, la première partie de connecteur 2 peut être solidarisée avec la paroi support 3, en vissant manuellement d'un quart de tour les écrous sur les premières douilles 11, engagées dans leurs alésages respectifs de la première partie de connecteur 2.

Selon une autre variante de réalisation, les coupelles 36 pourraient être solidaires des écrous 30.

Les secondes douilles 12 sont traversées chacune par une vis de type quart de tour 13, apte à venir s'accrocher dans un filetage 14 des premières douilles 11. Les écrous 30 et les vis 13 sont munis respectivement de reliefs axiaux 22 et 21, permettant de les visser aisément à la main.

La seconde partie de connecteur peut alors être mise en place en position connectée sur la première partie de connecteur, déjà maintenue par la paroi support. Les deux parties de connecteur peuvent alors être solidarisées à la main à l'aide des deux vis quart de tour 13.

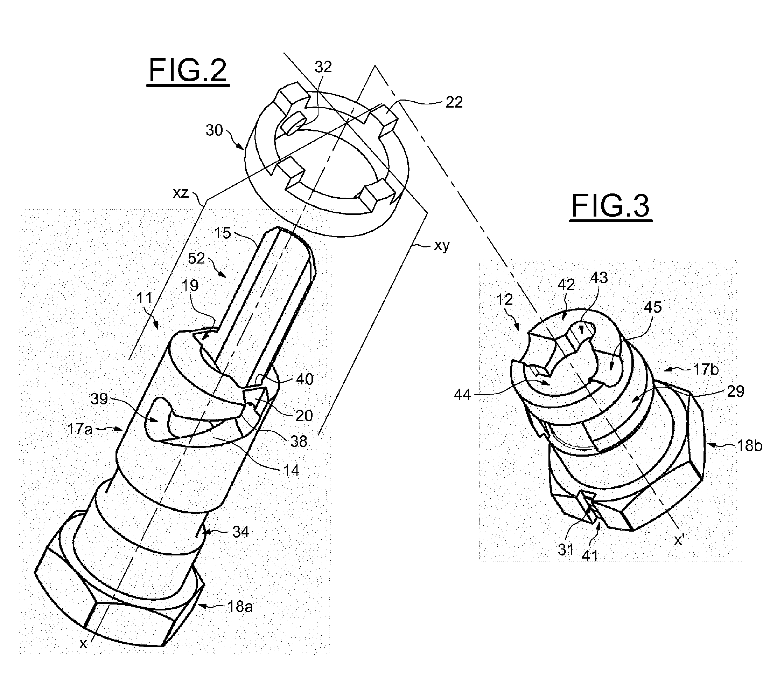

La figure 2 est une vue en perspective d'une première douille 11 de l'ensemble de connexion de la figure 1. On retrouve sur la figure 2 quelques éléments communs à la figure 1, les mêmes éléments étant désignés par les mêmes références. La première douille 11 comprend un corps de guidage 17a ayant la forme globalement d'un cylindre creux, et une tête d'arrêt 18a de forme hexagonale et élargie par rapport au diamètre du corps de guidage 17a.

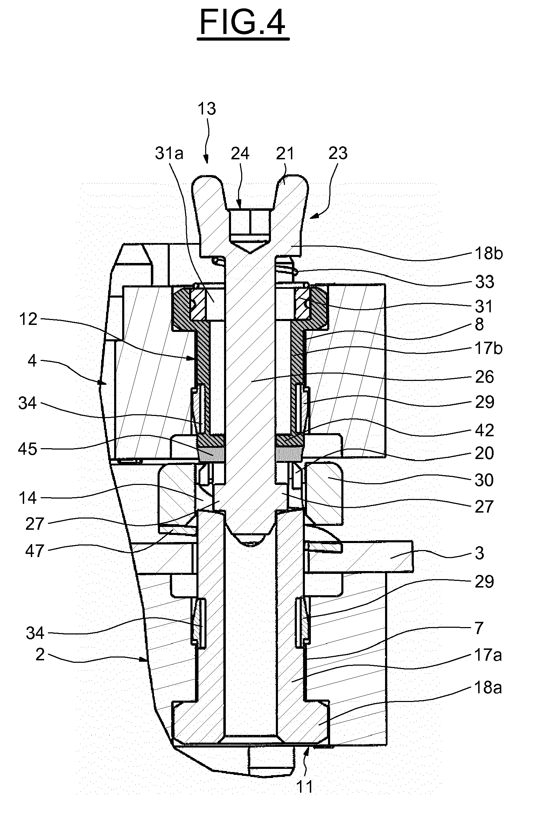

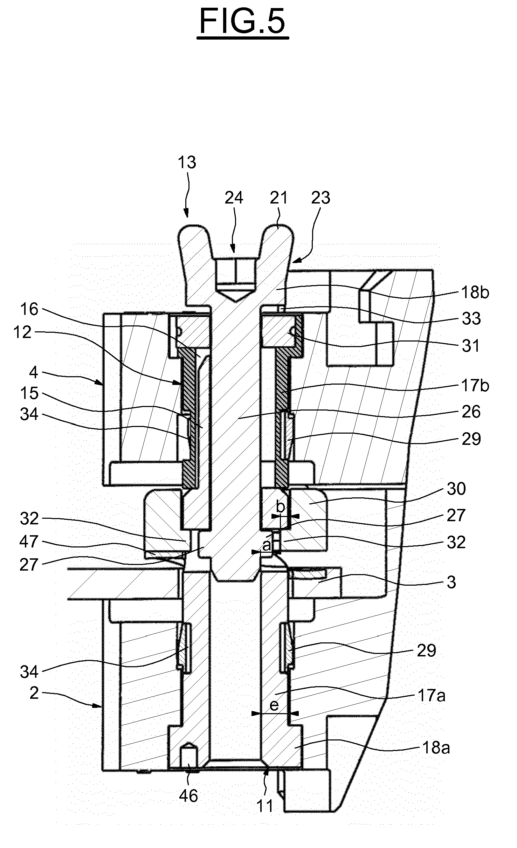

Le corps de guidage 17a présente localement une réduction de section extérieure 34 permettant de placer autour du corps de guidage 17a une bague élastique 29 (non visible sur la figure 2 mais visible sur les figures 4 et 5) de forme extérieure sensiblement conique, et de diamètre maximal légèrement supérieur au diamètre du corps de guidage 17a.

La douille 11 est pourvue, au niveau de son extrémité 52 opposée à la tête d'arrêt 18a, d'une dent de détrompage 15 faisant saillie parallèlement à l'axe général de la douille x-x', mais excentrée par rapport à cet axe.

La dent 15 est réalisée ici sous forme d'une portion de cylindre de diamètre intérieur égal au diamètre intérieur du corps de guidage 17a, et de diamètre extérieur légèrement inférieur au diamètre extérieur du corps de guidage 17a.

La dent de détrompage 15 peut ainsi être insérée dans un orifice adapté 44 (visible sur la figure 3) de la seconde douille 12, qui présente un diamètre extérieur identique ou voisin de celui de la première douille 11.

La douille 11 comporte un filetage de type quart de tour 14, sous la forme d'une gorge traversant toute l'épaisseur du corps de guidage 17a. La gorge traversante du filetage 14 s'étend entre une portion de retenue 39 du filetage, définissant la position des pions 27 de la vis 13 lorsque celle-ci est en position vissée, et une portion d'insertion 38, proche de l'extrémité de la douille opposée à la tête d'arrêt 18a. Au niveau de la portion de retenue 39, la gorge comporte un élargissement axial en direction de l'extrémité 52 de la douille. Cet élargissement peut ainsi verrouiller en rotation un pion 27 de vis 13 ou un pion 32 d'écrou 30 dans le filetage, si la vis ou l'écrou sont soumis à une force de rappel élastique tendant à les éloigner de la tête d'arrêt.

Le filetage 14 s'étend ici sur un secteur angulaire d'environ 90°. On peut bien sûr envisager des variantes de réalisation où le filetage s'étendrait sur un secteur angulaire supérieur à 90° voire sur un secteur angulaire inférieur à 90°. On peut également envisager des variantes de réalisation dans lesquelles la première douille serait munie de plus que deux gorges définissant le filetage 14, par exemple, serait munie de trois gorges distribuées à 60° l'une par rapport à l'autre.

Le diamètre intérieur du corps de guidage 17a peut par exemple être très légèrement supérieur à un diamètre extérieur d'une tige centrale 26 de la vis quart de tour 13 (non visible sur la figure 2, mais visible sur les figures 4 et 5). Afin de permettre l'introduction des pions 27 de la vis quart de tour 13 dans l'alésage 14 (pions non visibles sur la figure 3, mais visibles sur les figures 4 et 5), la première douille 11 comporte des rainures d'engagement intérieures 19 sous forme de rainures sensiblement axiales ménagées entre l'extrémité 52 de la douille 11, et la portion d'insertion 38 du filetage 14.

L'étendue radiale et la largeur des rainures d'engagement 19, sont dimensionnées pour permettre d'insérer, suivant une direction sensiblement verticale, les pions de la vis quart de tour 13 jusqu'à la portion d'insertion 38 du filetage 14. Une fois les pions de la vis 13 insérés dans le filetage, ils peuvent être guidés par le filetage jusqu'à la portion de retenue 39 du filetage. Par largeur de la rainure, on entend la largeur perpendiculairement à l'axe xx', c'est-à-dire d'un bord à l'autre de la rainure.

La première douille 11 comporte également deux rainures d'engagement extérieures 20, ménagées à partir de la face extérieure du corps de guidage, et dont la profondeur radiale, ainsi que la largeur, sont dimensionnées de manière à pouvoir amener des pions 32 de l'écrou 30 de l'extrémité 52 de la douille jusqu'à la partie portion d'insertion 38 du filetage 14. Une fois les pions de l'écrou 30 insérés dans le filetage, ils peuvent être guidés par le filetage jusqu'à la portion de retenue 39 du filetage. L'étendue radiale de la portion 39 de retenue est prévue pour pouvoir loger simultanément les pions de la vis 13 et les pions de l'écrou 30.

Dans l'exemple de réalisation illustré, un pont de matière 40 subsiste entre chaque rainure d'engagement intérieure 19 et la rainure d'engagement extérieure 20 associée à la même gorge du filetage 14. On pourrait envisager des variantes de réalisation ne laissant subsister aucun pont de matière 40, la gorge traversante du filetage 14 s'étendant alors jusqu'à l'extrémité axiale 52 de la première douille. Cependant, dans une telle variante de réalisation, l'ouverture ainsi ménagée de part en part d'un diamètre de l'extrémité de la douille 11 risquerait d'être élargie ou comprimée indûment par flexion plastique des portions d'extrémité de la douille 11.

Dans l'exemple de réalisation illustré, les rainures d'engagement intérieures 19 et extérieures 20 sont de largeur comparable. On peut envisager des variantes de réalisation dans lesquelles les rainures d'engagement intérieures et extérieures sont de largeur différentes, notamment si les pions de la vis et de l'écrou sont de diamètres différents.

La première douille 11 peut par exemple être réalisée par moulage d'un alliage métallique, dans un moule instrumenté afin de ménager les ouvertures nécessaires. La rigidité du métal permet notamment d'assurer une stabilité dimensionnelle suffisante au niveau du filetage 14.

On pourra cependant envisager une variante de réalisation avec par exemple des matières polymères suffisamment rigides, par exemple rigidifiées à l'aide de charges minérales.

Dans le prolongement axial de la première douille est représenté l'écrou 30, dans une position permettant de l'insérer axialement autour de la première douille 11, les pions 32 de l'écrou venant se loger dans les rainures d'engagement extérieures 20.

La figure 3 illustre une seconde douille 12, appartenant à l'ensemble de connexion de la figure 1. On retrouve sur la figure 3 des éléments communs à la figure 1, les mêmes éléments étant alors désignés par les mêmes références. Lors de la fermeture du connecteur, les axes xx' de la figure 2 et de la figure 3 sont alignés.

La seconde douille 12 comporte un corps de guidage 17b muni également d'une réduction de section 34 permettant de loger une bague élastique de rétention dans l'alésage de la seconde partie de connecteur 4. La tête d'arrêt 18b est également hexagonale de manière à pouvoir être disposée suivant six positions angulaires différentes dans un logement complémentaire de la seconde partie de connecteur 4.

Une fente axiale 41 ménagée sur une des pans de la tête, permet de repérer la position angulaire de la seconde douille 12 dans la seconde partie de connecteur 4, lorsque seule la face d'extrémité de la tête d'arrêt 18b est visible. Le corps de guidage 17b de la seconde douille 12 présente globalement une forme de cylindre creux. Au niveau de la tête d'arrêt 18b, ce cylindre creux est fermé par une rondelle de fermeture 31, insérée axialement dans un logement de la tête d'arrêt 18b, de manière à affleurer sensiblement au niveau de la face extérieure d'extrémité de la tête d'arrêt 18b.

Du côté opposé à la tête d'arrêt 18b, le corps de guidage 17b de la seconde douille 12 est fermé partiellement par une paroi d'extrémité 42. La paroi d'extrémité 42 comporte une zone de découpe 43 autorisant le passage de la vis quart de tour 13 pour une position angulaire déterminée. La paroi d'extrémité 42 comporte également un orifice adapté 44, de dimensions adaptées pour permettre l'insertion de la dent 15 de la première douille à l'intérieur du corps de guidage de la seconde douille 12. Les plus grandes dimensions de la découpe 43 -centrée- destinée aux pions, et de la découpe 44 - excentrée- destinée à la dent, sont disposées perpendiculairement l'une à l'autre. De cette façon, la découpe résultante de la paroi d'extrémité 42, interdit à la fois l'insertion de la vis pour une position angulaire de la vis par rapport à la douille 12 autre que celle prévue, et l'insertion de la dent pour une position angulaire relative des deux douilles autre que celle prévue.

La paroi d'extrémité 42 est globalement plane mais présente sur sa face extérieure deux encoches cylindriques d'axe perpendiculaire à l'axe x-x' de la douille, faisant office de logement de calage 45 pour les pions 32. Le diamètre de la portion de cylindre ainsi "creusée" dans la paroi d'extrémité 42 est supérieur au diamètre des pions de la vis sans fin 13 afin de pouvoir venir appuyer ces pions contre la paroi d'extrémité dans le fond de ces logements 45.

Les figures 4 et 5 illustrent deux vues en coupe d'un dispositif de fixation utilisé dans un ensemble de connexion similaire à celui de la figure 1. On retrouve sur les figures 4 et 5 des références communes aux figures 1 à 3, les mêmes éléments étant désignés par les mêmes références.

La figure 4 est une vue en coupe par le plan xy schématisé sur la figure 2, contenant l'axe xx' et passant par le milieu des rainures d'engagement extérieures 20 qui est aussi le milieu des rainures d'engagement intérieures 19. La figure 4 montre le dispositif au moment de l'insertion de la vis quart de tour 13 dans la rainure d'engagement intérieure 19. La vis sans fin 13 comporte une tige 26 et des pions d'extrémité 27 disposés perpendiculairement à cette tige, et dépassant radialement de la tige. A son extrémité opposée aux pions 27, la vis 13 comporte une tête de vis 23, élargie par rapport à la tige 26. La tête de vis 23 est munie, d'une part d'un orifice de vissage 24 permettant d'insérer un outil spécifique, par exemple une clé à six pans, et est munie par ailleurs de reliefs, ici de reliefs de type « vis papillon » permettant de manier la vis à la main, sans outil spécifique.

Pour des raisons d'encombrement, les reliefs 21 ont une orientation de préférence axiale de manière à ce qu'au moment de l'assemblage, l'opérateur ne soit pas gêné par la proximité de parois axiales de la seconde partie de connecteur 4.

La vis 13 est insérée de manière à traverser axialement la seconde douille 12, à partir de la tête d'arrêt 18b de la douille. La tige 26 traverse la rondelle de fermeture 31 ainsi que la paroi d'extrémité 42 de la douille 12. La rondelle de fermeture 31 est à cette fin munie d'une découpe localement élargie 31a afin de permettre l'insertion des pions 27 de la vis 13 dans une position angulaire déterminée de la vis 13.

Entre la rondelle de fermeture 31 et la base de la tête de vis 23, est disposé un ressort 33 qui est constamment en compression dès que les pions 27 de la vis ont été insérés au travers de la paroi d'extrémité 42 de la seconde douille 12.

La vis quart de tour 13 est ainsi soumise à une force de rappel élastique tendant à rappeler les pions vers l'intérieur de la douille.

Avant l'assemblage des deux parties de connecteur, illustré sur les figures 4 et 5, chaque connecteur peut être préassemblé en y insérant les douilles dédiées, maintenues en place dans leurs alésages respectifs à l'aide de bagues élastiques 29 disposées autour du corps de guidage des première et seconde douilles.

La vis quart de tour 13 est alors déjà en place à l'intérieur de la seconde douille 12, orientée angulairement par le logement de calage 45 retenant les pions d'extrémité 27.

Un opérateur peut alors insérer la première partie de connecteur 2 au travers de l'ouverture 9 de la paroi support, positionnant du même coup les corps de guidage des premières douilles dans les perçages latéraux 10 de la paroi support. A l'aide de deux écrous quart de tour 30, et sans outil spécifique, l'opérateur peut alors préassembler de manière solide la première partie de connecteur sur la paroi support.

Après avoir préassemblé la première partie de connecteur 2 sur la paroi support 3, l'opérateur vient appliquer la seconde partie de connecteur de manière à l'enclencher dans la première partie de connecteur. La première douille et la seconde douille, qui font office de détrompeurs, ont été prépositionnées angulairement dans la première partie de connecteur et dans la seconde partie de connecteur, de manière à ce que la dent de détrompage 15 se trouve face à l'orifice défini par la découpe 43. Les pions 27 de la vis 13, se trouvent alors placés face aux rainures 19 d'engagement intérieur permettant d'amener les pions vers le filetage 14.

Une fois que l'ensemble de connexion est dans cette configuration, il suffit à l'opérateur d'exercer une pression sur la tête de la vis 13 pour que les pions 27 de la vis parcourent les rainures d'engagement intérieur 19 et se placent au début du filetage 14 au niveau de sa portion d'insertion 38.

On se retrouve alors dans la configuration de la figure 4.

L'opérateur peut alors effectuer un mouvement de rotation de la vis 13 pour amener les pions 27 vers la portion retenue 39 du filetage 14. On se retrouve alors dans la configuration de la figure 5. Le plan de coupe xz de la figure 5 -schématisé sur la figure 2- est décalé de 90° du plan de coupe xy de la figure 4. On remarque en particulier sur la figure 5, qu'en position finale d'assemblage, les pions 27 de la vis 13 font face aux pions de l'écrou 30. L'axe des pions 27 en position assemblée est perpendiculaire à la dent 15, et on peut voir sur la figure 5 la dent 15 insérée à l'intérieur du corps de guidage de la seconde douille 12. Par perpendiculaire à la dent 15, on entend perpendiculaire à la ligne joignant les deux bords latéraux de la dent 15.

Afin de loger simultanément les pions de la vis 27 et les pions de l'écrou 30 dans le filetage 14, l'épaisseur du filetage 14, et donc l'épaisseur "e" de la paroi du corps de guidage de la première douille 11, doit être supérieure à la longueur d'engagement "a" des pions de la vis 13. Il doit d'ailleurs être supérieur ou égal à la somme "a+b" des longueurs d'engagement "a" et "b", respectivement des pions 27 de la vis 13 et des pions 32 de l'écrou 30. Par longueur d'engagement, on entend ici la longueur radiale de recouvrement entre un pion et l'épaisseur de filetage 14.

Comme la tête d'extrémité de la seconde douille 12, la tête d'extrémité de la première douille 11 comporte un relief de repérage, ici un perçage 46 effectué à partir de l'extrémité de la douille 12.

Les longueurs des corps de guidage 17a, 17b des deux douilles, et les longueurs de leurs alésages respectifs sur la première et sur la seconde partie du connecteur, sont dimensionnées de manière à ce que les deux douilles viennent en contact quand les deux parties du connecteur sont assemblées. De cette manière, les pions 27 de la vis 13 sont déjà partiellement engagés dans les rainures d'engagement 19, lorsque les deux parties de connecteur sont en position d'assemblage, avant même d'avoir exercé une action sur la vis 13.

On limite ainsi les risques de rencontrer une difficulté à insérer les pions 27 dans la rainure 19, difficulté qui pourrait par exemple être liée à un écart dimensionnel, cumulé avec une déformation d'une partie libre de la tige 26, dans un cas de figure où les pions 27 viendraient buter sur l'extrémité de la première douille 11.

La longueur de la tige 26 de la vis 13, ainsi que l'épaisseur minimale du ressort de compression 33, sont dimensionnées de manière à ce que la base de la tête de vis 23 vienne en butée sur le ressort 33 en position de compression maximale, quand les pions 27, parcourant le filetage 14, se trouvent dans leur position la plus proche de la tête d'arrêt 18a de la première douille. Cette position est légèrement plus proche de la tête d'arrêt que la position finale de verrouillage des pions. On limite ainsi le risque d'un désengagement accidentel de la vis quart de tour 13, qui pourrait survenir par exemple lors de la mise en vibration du système.

On remarque en comparant les figures 4 et 5, que la rondelle de fermeture 31 comporte une découpe 31 a dont la largeur radiale est suffisante dans le plan de coupe de la figure 4 pour laisser passer les pions 27 de la vis 13, et que la largeur de cette découpe dans le plan de coupe de la figure 5 interdit le passage des pions 27 au travers de la rondelle 31 dans une position perpendiculaire à la précédente.

La paroi d'extrémité 42 comporte, elle, une zone de découpe 43 permettant de passer les pions au travers de la paroi lorsque leur axe se trouve dans le plan de coupe de la figure 5, et ne permettant pas de passer les pions 27 au travers de la paroi 42 lorsque l'axe des pions se trouve dans le plan de coupe de la figure 4.

On peut cependant envisager des variantes de réalisation, où les ouvertures de la rondelle 31 et de la paroi d'extrémité 42 sont alignées, de manière à ne pas avoir besoin de faire tourner la vis 13 pour lui faire traverser la seconde douille 12. Dans tous les cas, après avoir inséré les pions 27 au travers de la paroi d'extrémité 12, on effectue alors une rotation de 90° pour placer les pions en appui sur le logement de calage 45.

On peut envisager des variantes de réalisation où la seconde douille 12 serait percée de part en part par un orifice dimensionné au plus juste pour permettre à la fois, pour une position angulaire donnée, d'insérer les pions 27 de la vis 13 et, pour une position angulaire donnée, d'insérer la dent de détrompage 15.

La seconde douille 12 ainsi que la rondelle de fermeture 31 peuvent être réalisées en métal. Selon une variante de réalisation, la seconde douille peut être réalisée comme une pièce monobloc traversée de part en part par une ouverture dimensionnée au plus juste pour permettre à la fois le passage des pions 27 et l'insertion de la dent 15. Dans cette seconde variante de réalisation, la seconde douille 12 est, de manière préférentielle, réalisée en matière plastique, afin de compenser l'augmentation d'épaisseur par une densité moindre du matériau. La vis 13 est de manière préférentielle réalisée en métal.

L'écrou 30, qui sert essentiellement à assurer la fixation transitoire de la première partie de connecteur, est de manière préférentielle réalisé en matière plastique afin d'alléger l'ensemble. Il pourrait cependant être réalisé en métal pour garantir un assemblage final plus solide.

Afin de maintenir les pions 32 de l'écrou 30 dans leur position de verrouillage, il est préférable de soumettre l'écrou à une force axiale tendant à l'éloigner de la tête d'arrêt 18a. Cette force axiale peut être assurée par une coupelle élastomère 36 comme dans le mode de réalisation illustré sur la figure 1, la coupelle étant disposée de manière à écarter la paroi support d'avec la première partie de connecteur. Cette force axiale peut également être assurée au moyen d'une rondelle de type Belleville ou d'une rondelle fendue 47, comme illustré sur les figures 4 et5, la rondelle étant disposée entre la paroi support 3 et l'écrou 30.

Dans le mode de réalisation de la figure 1, la coupelle élastomère 36 est de profondeur axiale suffisante pour permettre, avant l'assemblage de la première partie de connecteur sur la paroi de support 3, de maintenir l'écrou 30 en position vissée même en absence de la paroi support 3.

La coupelle élastomère 36 est insérée dans un renfoncement 48 d'une face frontale de la première partie de connecteur, faisant face, en position d'assemblage, à la seconde partie de connecteur. La coupelle comprend une paroi de fond 49 et une paroi axiale 50 sensiblement de même épaisseur.

La hauteur axiale h de la paroi axiale 50 est telle, que lorsque la coupelle est en appui au fond du renfoncement 48, et que l'écrou 30 est en position vissée dans la portion d'extrémité de retenue 39 du filetage 14, l'extrémité de la paroi axiale 50 vient en contact avec la base de l'écrou 30 préassemblé en position vissée dans la première douille.

De cette manière, la coupelle élastomère permet de maintenir l'écrou 30 en position vissée sur la première partie de connecteur avant la mise en place de cette première partie sur la paroi support 3. La coupelle élastomère permet ensuite d'exercer un effort élastique comprimant la paroi support 3 contre l'écrou 30, une fois la première partie de connecteur montée sur la paroi support. L'élasticité de la coupelle permet à l'ensemble de connexion d'être compatible avec différentes épaisseurs de parois supports.

Lorsque l'on démonte l'écrou 30 pour assembler la première partie du connecteur sur la paroi support 3, la coupelle élastomère, qui est légèrement plus large radialement que le renforcement 48, reste maintenue par déformation élastique à l'intérieur du renfoncement 48. On évite ainsi de perdre des pièces lors de l'assemblage de la première partie de connecteur : l'écrou 30 est disponible pour l'opérateur, prévissé sur la première douille, facilement démontable, et la coupelle est solidaire de la première partie de connecteur.

L'invention ne se limite pas aux exemples de réalisation et peut se décliner en de nombreuses variantes. Le nombre de pions de la vis et de l'écrou peut être différent de deux : on peut par exemple envisager une vis et/ou un écrou avec trois ou quatre pions. Le filetage quart de tour peut s'étendre sur un secteur angulaire différent de 90°, il peut par exemple être supérieur à 90°. La forme des têtes d'arrêt peut être autre qu'hexagonale. Elle doit cependant permettre d'empêcher la rotation des têtes dans leur logement à l'intérieur de la première ou de la seconde partie de connecteur. Elle de préférence également et permettre une insertion à différentes positions angulaires dans le logement. On peut par exemple envisager des têtes d'arrêt triangulaires.

L'ensemble de connexion selon l'invention permet d'assembler et de désassembler de manière rapide, sans outil spécifique, deux parties d'un connecteur et une paroi support. L'assemblage est obtenu au moyen d'un nombre réduit de pièces, qui peuvent être déjà prépositionnées sur les parties de connecteur avant l'assemblage de ce dernier.

Pour l'assemblage de la seconde partie de connecteur, la vis quart de tour 13 est déjà insérée en position de vissage dans la seconde douille, et aucune pièce n'est à enlever ni à rajouter par l'opérateur.

Pour l'assemblage de la première partie de connecteur, la coupelle élastomère 36 sert à la fois à maintenir l'écrou 30 en position préassemblée, et sert ultérieurement à accommoder différentes épaisseurs éventuelles de la paroi support 3 sur laquelle est monté le connecteur. L'écrou peut donc avantageusement être stocké sur la première partie de connecteur.

## Revendications

1. Dispositif de fixation amovible pour un ensemble de connexion (1) servant au raccordement de câbles arrivant de part et d'autre d'une plaque support (3), le dispositif comportant une première douille (11) et une seconde douille (12) comprenant chacune un corps de guidage (17a, 17b) et une tête d'arrêt élargie (18a, 18b), le dispositif comprenant en outre une vis (13) de type quart de tour traversant axialement la seconde douille (12) et comportant au moins deux premiers pions (27) aptes à venir se verrouiller dans un filetage (14) de la première douille (11), **caractérisé en ce que** le dispositif comporte un écrou (30) de type quart de tour, **en ce que** le filetage (14) traverse la paroi de la première douille (11), l'épaisseur de ladite paroi étant supérieure à la longueur radiale (a) de recouvrement entre chaque premier pion (27) et le filetage (14), et **en ce que** l'extrémité filetée (52) de la première douille (11) comporte des rainures d'engagement sensiblement axiales (20) permettant d'engager dans le filetage, par une face extérieure de la douille, deux seconds pions (32), dépassant radialement vers l'intérieur de l'écrou (30), l'écrou (30) pouvant ainsi être vissé dans le filetage (14) de la première douille, conjointement à la vis quart de tour (13).

2. Dispositif selon la revendication 1, dans lequel la première douille (11) comporte au moins une dent de détrompage (15) s'étendant axialement à l'opposé de la tête d'arrêt (18a), et apte à s'insérer dans un orifice complémentaire (44) de la seconde douille (12), l'orifice complémentaire étant excentré par rapport à l'axe (xx') commun de montage des deux douilles (11, 12).

3. Dispositif selon la revendication 2, dans lequel la dent (15) s'étend sur une portion angulaire limitée par deux rainures d'engagement (20).

4. Dispositif selon l'une quelconque des revendications précédentes, dans lequel la seconde douille (12) comporte à son extrémité opposée à la tête d'arrêt (18b), un creux d'appui et de prépositionnement angulaire (45) des pions (27) de la vis quart de tour, l'axe ainsi défini pour les pions se projetant axialement sur les rainures d'engagement (20) quand la dent (15) de la première douille es insérée dans la seconde douille (12).

5. Dispositif selon l'une quelconque des revendications précédentes, dans lequel la vis quart de tour (13) et l'écrou (30) comportent chacun au moins deux zones de prises (21, 22) s'étendant axialement et les rendant aptes à être vissés à la main sans outil.

6. Ensemble de connexion (1) comprenant un dispositif selon l'une des revendications 1 à 5, une première partie de connecteur (2) et une seconde partie de connecteur (4), aptes à recevoir respectivement la première douille (11) et la seconde douille (12) dans deux alésages (7,8) en regard l'un de l'autre.

7. Ensemble de connexion selon la revendication 6, comprenant un élément élastique (36, 47) compressible axialement, apte à être disposé autour de la première douille (11), interposé entre la première partie de connecteur et l'écrou (30) vissé autour de la première douille (11), et apte, en absence d'autres éléments intercalés entre la première partie de connecteur et l'écrou, à exercer un appui axial simultanément sur la première partie de connecteur et sur l'écrou vissé.

8. Ensemble de connexion selon la revendication 7, dans lequel l'élément élastique (36) est solidaire de la première partie de connecteur (2).

9. Ensemble de connexion selon la revendication 7, dans lequel l'élément élastique est solidaire de l'écrou.

10. Ensemble de connexion selon la revendication 8, l'élément élastique comprenant une coupelle élastomère (36) entourant l'alésage (7) de la première partie de connecteur, la coupelle étant maintenue par compression radiale de sa base dans un logement (48) de la première partie de connecteur.

11. Ensemble de connexion selon la revendication 10, dans lequel la coupelle élastomère (36) comporte une paroi axiale (50) interrompue sur au moins une portion angulaire de la coupelle.

## Patentansprüche

1. Vorrichtung zur entfernbaren Befestigung für eine Verbindungsanordnung (1), die zum Verbinden von Kabeln dient, die beiderseits einer Stützplatte (3) ankommen, wobei die Vorrichtung eine erste Hülse (11) und eine zweite Hülse (12) umfasst, die jeweils einen Führungskörper (17a, 17b) und einen verbreiterten Arretierkopf (18a, 18b) umfassen, wobei die Vorrichtung ferner eine Schraube (13) der Art einer Vierteldrehschraube umfasst, die axial durch die zweite Hülse (12) geht und mindestens zwei erste Klötze (27) umfasst, die geeignet sind, sich in einem Gewinde (14) der ersten Hülse (11) zu verriegeln, **dadurch gekennzeichnet, dass** die Vorrichtung eine Mutter (30) der Art einer Vierteldrehmutter umfasst, dass das Gewinde (14) durch die Wand der ersten Hülse (11) geht, wobei die Dicke der Wand größer als die radiale Überdeckungslänge (a) zwischen jedem ersten Klotz (27) und dem Gewinde (14) ist, und dass das Gewindeende (52) der ersten Hülse (11) im Wesentlichen axiale Eingriffsrillen (20) umfasst, die gestatten, dass zwei zweite Klötze (32) über eine äußere Fläche der Hülse in das Gewinde eingreifen, die radial von der Mutter zum Inneren der Mutter (30) vorragen, wobei die Mutter (30) somit gemeinsam mit der Vierteldrehschraube (13) in das Gewinde (14) der ersten Hülse geschraubt werden kann.

2. Vorrichtung nach Anspruch 1, wobei die erste Hülse (11) mindestens einen Unverwechselbarkeitszahn (15) umfasst, der sich axial in der entgegengesetzte Richtung dem Arretierkopf (18a) erstreckt und geeignet ist, sich in eine komplementäre Öffnung (44) der zweiten Hülse (12) einzufügen, wobei die komplementäre Öffnung bezüglich der gemeinsamen Montageachse (xx') der beiden Hülsen (11, 12) exzentrisch ist.

3. Vorrichtung nach Anspruch 2, wobei sich der Zahn (15) über einen Winkelsektor erstreckt, der durch zwei Eingriffsrillen (20) begrenzt ist.

4. Vorrichtung nach einem der vorhergehenden Ansprüche, wobei die zweite Hülse (12) an ihrem dem Arretierkopf (18b) gegenüberliegenden Ende eine Höhlung (45) zum Haltestellungsstützen und Winkelvorpositionieren der Klötze (27) der Vierteldrehschraube umfasst, wobei die so für die Klötze definierte Achse axial auf die Eingriffsrillen (20) fällt, wenn der Zahn (15) der ersten Hülse in die zweite Hülse (12) eingeführt ist.

5. Vorrichtung nach einem der vorhergehenden Ansprüche, wobei die Vierteldrehschraube (13) und die Mutter (30) jeweils mindestens zwei Griffbereiche (21, 22) umfassen, die sich axial erstrecken und es ihnen ermöglichen, von Hand und ohne Werkzeug verschraubt zu werden.

6. Verbindungsanordnung (1), umfassend eine Vorrichtung nach einem der Ansprüche 1 bis 5, einen ersten Verbinderteil (2) und einen zweiten Verbinderteil (4), die geeignet sind, jeweils die erste Hülse (11) und die zweite Hülse (12) in zwei sich gegenüberliegenden Bohrungen (7, 8) aufzunehmen.

7. Verbindungsanordnung nach Anspruch 6, umfassend ein elastisches Element (36, 47), das axial zusammendrückbar ist, das geeignet ist, um die erste Hülse (11) herum angeordnet zu werden, zwischen dem ersten Verbinderteil und der um die erste Hülse (11) geschraubte Mutter (30), und das geeignet ist, sich bei Abwesenheit anderer Elemente zwischen dem ersten Verbinderteil und der Mutter gleichzeitig axial auf den ersten Verbinderteil und auf die aufgeschraubte Mutter abzustützen.

8. Verbindungsanordnung nach Anspruch 7, wobei das elastische Element (36) fest mit dem ersten Verbinderteil (2) verbunden ist.

9. Verbindungsanordnung nach Anspruch 7, wobei das elastische Element (36) fest mit der Mutter verbunden ist.

10. Verbindungsanordnung nach Anspruch 8, wobei das elastische Element eine elastomere Manschette (36) umfasst, die die Bohrung (7) des ersten Verbinderteils umgibt, wobei die Manschette durch radiales Zusammendrücken ihrer Basis in einer Aufnahme (48) des ersten Verbinderteils gehalten wird.

11. Verbindungsanordnung nach Anspruch 10, wobei die elastomere Manschette (36) eine axiale Wand (50) umfasst, die an mindestens einem Winkelsektor der Manschette unterbrochen ist.

## Claims

1. Removable attachment device for a connection assembly (1) for connecting cables from either side of a support plate (3), the device comprising a first bush (11) and a second bush (12), each comprising a guiding body (17a, 17b) and an enlarged stop head (18a, 18b), the device also comprising a screw (13) of the quarter-turn type which passes axially through the second bush (12) and comprises at least two first pegs (27) which are able to lock in a thread (14) of the first bush (11), **characterized in that** the device comprises a nut (30) of the quarter-turn type, **in that** the thread (14) passes through the wall of the first bush (11), said wall being thicker than the radial overlap length (a) between each first peg (27) and the thread (14), and **in that** the threaded end (52) of the first bush (11) comprises substantially axial engagement slots (20) by means of which it is possible to engage two second pegs (32) in the thread, via an outer face of the bush, which pegs project from the nut radially toward the inside of the nut (30), wherein the nut (30) may thus also be screwed into the thread (14) of the first bush, in conjunction with the quarter-turn screw (13).

2. Device according to Claim 1, in which the first bush (11) comprises at least one foolproofing tooth (15) which extends axially away from the end opposite from the stop head (18a) and is able to be inserted into a complementary opening (44) of the second bush (12), the complementary opening being eccentric with respect to the common mounting axis (xx') of the two bushes (11, 12).

3. Device according to Claim 2, in which the tooth (15) extends over an angular portion which is limited by two engagement slots (20).

4. Device according to any one of the preceding claims, in which the second bush (12) comprises, at its opposite end from its stop head (18b), an indentation (45) for the abutment and angular prepositioning of the pegs (27) of the quarter-turn screw, the axis thus defined for the pegs projecting axially onto the engagement slots (20) when the tooth (15) of the first bush is inserted into the second bush (12).

5. Device according to any one of the preceding claims, in which the quarter-turn screw (13) and the nut (30) each comprise at least two grip zones (21, 22) which extend axially and by means of which they can be screwed by hand, without the use of a tool.

6. Connection assembly (1) comprising a device according to one of Claims 1 to 5, a first connector part (2) and a second connector part (4) being able to receive, respectively, the first bush (11) and the second bush (12) in two mutually facing bores (7, 8).

7. Connection assembly (1) according to Claim 6, comprising an elastic element (36, 47) which can be compressed in the axial direction and can be arranged around the first bush (11), such that it is interposed between the first connector part and the screwed-on nut (30) around the first bush (11), and can, in the absence of other elements interposed between the first connector part and the nut, exert an axial pressure both on the first connector part and the screwed-on nut.

8. Connection assembly according to Claim 7, in which the elastic element (36) is secured to the first connector part (2).

9. Connection assembly according to Claim 7, in which the elastic element is secured to the nut.

10. Connection assembly according to Claim 8, the elastic element comprising an elastomeric cup (36) surrounding the bore (7) of the first connector part, the cup being held by radial compression of its base in a recess (48) of the first connector part.

11. Connection assembly according to Claim 10, in which the elastomeric cup (36) comprises an axial wall (50) which is discontinuous over at least one angular portion of the cup.
